# EUROPÄISCHE PATENTANMELDUNG

(11) **EP 4 838 096 A1**
(43) Veröffentlichungstag der Anmeldung: **11.11.2026**
(21) Anmeldenummer: 25174692.1
(22) Anmeldetag: 07.05.2025
(51) Int. Cl.: F04D 17/16, F04D 25/06, F04D 29/053, F04D 29/059, F04D 29/28

(54) **VENTILATOR**

(71) Anmelder: punker GmbH, 24340 Eckernförde (DE)
(72) Erfinder: Kock, Lennart, 24354 Kosel (DE); Wolf, Matthias, 24107 Ottendorf (DE)
(74) Vertreter: Patentanwälte Magenbauer & Kollegen Partnerschaft mbB

(57) **Zusammenfassung**

Die Erfindung betrifft einen Ventilator (1; 51) mit einem Stator (10; 60) und einem drehbeweglich am Stator (10; 60) gelagerten Rotor (30; 80), der eine erste Ronde (32; 82) und eine mit der ersten Ronde (32; 82) verbundene zweite Ronde (33; 83) aufweist, wobei die erste Ronde (32; 82) und die zweite Ronde (33; 83) jeweils koaxial zu einer Rotationsachse (2; 52) ausgerichtet sind und wobei in einem ersten Ringspalt (47; 97), der von einer ersten Innenfläche (38; 88) der ersten Ronde (32; 82) und von einer zweiten Innenfläche (39; 89) der zweiten Ronde (33; 83) begrenzt wird, eine mit dem Stator (10; 60) verbundene, kreisringförmige erste Magneteinrichtung (11; 61) angeordnet ist, wobei an der ersten Innenfläche (38; 88) und/oder an der zweiten Innenfläche (39; 89) eine zweite Magneteinrichtung (31; 81) festgelegt ist und wobei die erste Ronde (32; 82) mit mehreren Schaufeln (34; 84) versehen ist.

## Beschreibung

Die Erfindung betrifft einen Ventilator.

Die DE 10 2022 133 876 A1 offenbart eine Lüftervorrichtung, die zum Abzug von Kochdünsten durch eine Ausnehmung in einem Kochfeld eingesetzt werden kann, wobei die Lüftervorrichtung an der Ausnehmung angeordnet ist und mindestens ein Lüfterrad umfasst, welches unterhalb des Kochfelds angeordnet ist, wobei dem Lüfterrad ein Antriebsmotor mit Statorelementen und Rotorelementen zugeordnet ist und wobei die Statorelemente als Elektromagnete ausgebildet sind und umfangsseitig um die Ausnehmung innerhalb des Kochfeldgehäuses angeordnet sind und wobei die Rotorelemente als Permanentmagnete ausgebildet sind und unmittelbar am Lüfterrad angeordnet sind.

Die Aufgabe der Erfindung besteht darin, einen vielseitig einsetzbaren Ventilator mit kompakter Bauform bereitzustellen.

Diese Aufgabe wird dadurch gelöst, dass der Ventilator einen Stator und einen drehbeweglich um eine Rotationsachse am Stator gelagerten Rotor aufweist, wobei der Rotor eine erste Ronde und eine mit der ersten Ronde verbundene zweite Ronde aufweist, wobei die erste Ronde und die zweite Ronde jeweils koaxial zur Rotationsachse ausgerichtet sind und wobei in einem ersten Ringspalt, der von einer ersten Innenfläche der ersten Ronde und von einer zweiten Innenfläche der zweiten Ronde begrenzt wird, eine mit dem Stator verbundene, kreisringförmige erste Magneteinrichtung angeordnet ist, wobei an der ersten Innenfläche und/oder an der zweiten Innenfläche eine zweite Magneteinrichtung festgelegt ist und wobei die erste Ronde an einer der zweiten Ronde abgewandten ersten Außenfläche mit mehreren Schaufeln versehen ist.

Die erste Ronde weist eine erste Außenumfangsfläche auf, die durch eine kreisrunde Hüllkurve beschrieben werden kann, insbesondere kreisrund ausgebildet ist. In gleicher Weise gilt dies für die zweite Außenumfangsfläche der zweiten Ronde. Die erste Ronde und die zweite Ronde sind drehfest miteinander verbunden und begrenzen einen ersten Ringspalt. Der erste Ringspalt kann sich beispielsweise von der ersten oder zweiten Außenumfangsfläche in radialer Richtung nach innen bis kurz vor die Rotationsachse erstrecken. Alternativ kann vorgesehen sein, dass sich der erste Ringspalt ausgehend von der Rotationsachse in radialer Richtung nach außen bis kurz vor die erste Außenumfangsfläche oder die zweite Außenumfangsfläche erstreckt.

Vorzugsweise weist der Ringspalt in einer Querschnittsebene, die die Rotationsachse umfasst, einen rechteckigen Querschnitt auf, wobei eine kürzere Rechteckseite parallel zur Rotationsachse erstreckt ist und eine längere Rechteckseite quer zur Rotationsachse erstreckt ist. Besonders bevorzugt ist vorgesehen, dass eine Länge der längeren Rechteckseite wenigstens das fünffache, bevorzugt wenigstens das zehnfache, insbesondere wenigstens das zwanzigfache eine Länge der kürzeren Rechteckseite beträgt. Dementsprechend sind die erste Innenfläche der ersten Ronde und die zweite Innenfläche der zweiten Ronde parallel zueinander und quer zur Rotationsachse ausgerichtet.

Für eine Bereitstellung eines Drehmoments vom Stator auf den Rotor, durch das eine Rotationsbewegung des Motors um die Rotationsachse hervorgerufen wird, ragt eine mit dem Stator drehfest verbundene, kreisringförmige erste Magneteinrichtung bereichsweise in den ersten Ringspalt. Ferner ist der ersten Innenfläche und/oder der zweiten Innenfläche eine zweite Magneteinrichtung zugeordnet, die für eine magnetische Wechselwirkung mit der ersten Magneteinrichtung ausgebildet ist. Die erste Magneteinrichtung und die zweite Magneteinrichtung bilden einen Rotationsantrieb nach dem Prinzip des Axialflussmotors, der auch als Scheibenläufer bezeichnet wird. Je nach Ausgestaltung der ersten Magneteinrichtung und der zweiten Magneteinrichtung handelt es sich bei dem Rotationsantrieb um eine Bauform eines bürstenlosen Gleichstrommotors mit elektronischer Kommutierung oder um eine Bauform einer Gleichstrommaschine mit mechanischer Kommutierung (Bürstenkommutierung).

Durch die Anordnung der ersten Magneteinrichtung im Ringspalt, der von der ersten Ronde und der zweiten Ronde begrenzt wird, lässt sich eine kompakte Gestaltung des Rotationsantriebs, insbesondere eine vorteilhafte mechanische Integration des Rotationsantriebs in einen Bereich des Rotors, verwirklichen, der aus aerodynamischer Sicht weitgehend bedeutungslos ist, sodass der Rotationsantrieb für die Förderfunktion des Ventilators keine relevante Störkontur darstellt.

Hierbei wird davon ausgegangen, dass die Schaufeln, die an der ersten Außenfläche der ersten Ronde angebracht sind, in einem radial außen liegenden Bereich der ersten Ronde festgelegt sind. Vorzugsweise sind die Schaufeln in einem koaxial zur Rotationsachse ausgerichteten, kreisringförmigem Raumabschnitt aufgenommen. Dementsprechend sind in einer radial innenliegenden, vorzugsweise kreiszylindrisch ausgebildeten und koaxial zur Rotationsachse ausgerichteten Raumabschnitt keine Schaufeln angeordnet.

Die Schaufeln können als plattenförmige Elemente ausgebildet sein, deren größte Oberflächen eben oder in einer einzigen Raumrichtung oder in wenigstens zwei Raumrichtungen gekrümmt ausgebildet sind. Bevorzugt ist vorgesehen, dass die erste Ronde, die zweite Ronde sowie die Schaufeln jeweils aus dem gleichen Werkstoff, beispielsweise aus Metall oder Kunststoff, hergestellt sind.

Vorteilhafte Weiterbildungen der Erfindung sind Gegenstand der Unteransprüche.

Bei einer Ausführungsform der Erfindung ist vorgesehen, dass die erste Ronde an einem Außenumfangsbereich mit der zweiten Ronde verbunden ist und dass die erste Magneteinrichtung einen kleineren Außendurchmesser als die erste Ronde und die zweite Ronde aufweist, wobei wenigstens eine Ronde aus der Gruppe: erste Ronde, zweite Ronde, als Kreisring ausgebildet ist. Bei dieser Ausführungsform ist vorgesehen, dass die erste Magneteinrichtung von Innen in den Ringspalt hineinragt, wobei der Ringspalt im Außenumfangsbereich der ersten Ronde durch die Verbindung mit der zweiten Ronde zumindest bereichsweise verschlossen ist. Beispielhaft kann vorgesehen sein, dass die erste Ronde mit der zweiten Ronde im Außenumfangsbereich abschnittsweise, beispielsweise durch, insbesondere in konstanter Winkelteilung relativ zur Rotationsachse angeordnete, Schraubverbindungen oder Nietverbindungen, oder in Umfangsrichtung umlaufend, beispielsweise durch eine Schweißverbindung, verbunden ist.

Bei einer alternativen Ausführungsform der Erfindung ist vorgesehen, dass die erste Ronde und die zweite Ronde in einem radial innenliegenden Koppelbereich miteinander verbunden sind und dass die erste Magneteinrichtung einen größeren Außendurchmesser als die erste Ronde und/oder die zweite Ronde aufweist. Bei dieser Ausführungsform ist vorgesehen, dass die erste Magneteinrichtung einen größeren Außendurchmesser als der erste Ringspalt. Hierdurch wird ermöglicht, dass die erste Magneteinrichtung von außen in radialer Richtung nach innen in den ersten Ringspalt hineinragt, der seinerseits in radialer Richtung nach außen offen ausgestaltet ist. Die Verbindung der ersten Ronde mit der zweiten Ronde im Koppelbereich, der vorzugsweise einen gewissen Radialabstand gegenüber der Rotationsachse aufweist, kann durch mehrere, insbesondere in konstanter Winkelteilung relativ zur Rotationsachse angeordnete, Schraubverbindungen und/oder Nietverbindungen oder durch eine Schweißverbindung geschaffen werden.

Bei einer Ausgestaltung der Erfindung ist vorgesehen, dass die erste Magneteinrichtung als Leiterplatte ausgebildet ist, die mehrere kreisförmig um die Rotationsachse angeordnete Planarspulen aufweist, die eine Planarspulenanordnung bilden, und dass die zweite Magneteinrichtung als Permanentmagnetanordnung ausgebildet ist, die mehrere, insbesondere kreisscheibenförmig ausgebildete, Permanentmagnete umfasst. Bei einer Leiterplatte werden elektrisch leitfähige Leiterbahnen auf einem elektrisch isolierenden Trägersubstrat strukturiert, beispielsweise durch Nutzung einer kupferkaschierten Platte aus glasfaserverstärktem Kunststoff (FR4), wobei zur Strukturierung der Leiterbahnen ein fotochemischer Prozess sowie ein nachfolgender Ätzprozess verwendet werden können. Bevorzugt ist vorgesehen, dass die Leiterbahnen in mehreren Ebenen (multilayer printed circuit board) angeordnet sind und mit Hilfe von Durchkontaktierungen (vias) elektrisch miteinander verbunden sind, um jeweils eine Planarspule mit einer geeigneten Windungszahl und Windungsfläche bereitstellen zu können. Vorzugsweise ist vorgesehen, dass die Planarspulenanordnung mehrere in gleicher Winkelteilung angeordnete Planarspulen umfasst, die bei einer Projektion auf eine quer zur Rotationsachse ausgerichteten Projektionsebene jeweils in einem Segment eines ebenen Kreisrings angeordnet sind. Hierbei dient die Leiterplatte nicht nur zu Bereitstellung der jeweiligen Planarspulen, sondern auch zur elektrischen Kopplung der Planarspulen mit einer Steuerung. Vorzugsweise ist vorgesehen, dass hierzu an der Leiterplatte mehrere Kontaktfelder ausgebildet sind, die in zugeordnete Stecker einer Steuerung eingesteckt werden können, sodass keine zusätzliche Verkabelung für die elektrische Verbindung zwischen der Planarspulenanordnung und der Steuerung erforderlich ist. Bei dieser Ausgestaltung der Planarspulenanordnung besteht eine drehfeste Verbindung zwischen der Leiterplatte und der Steuerung, sodass keine elektrische Drehkontaktierung, beispielsweise mit einem rotierenden Kommutator und am Stator festgelegten Bürsten erforderlich ist. Alternativ ist vorgesehen, dass die Steuerung unmittelbar auf der Leiterplatte ausgebildet ist, wodurch Steckverbindungen zwischen der Steuerung und der Planarspulenanordnung entfallen können.

Die zweite Magneteinrichtung ist als Permanentmagnetanordnung ausgebildet, die mehrere, vorzugsweise plattenförmig, insbesondere kreisscheibenförmig, ausgebildete Permanentmagnete umfasst. Vorzugsweise ist vorgesehen, dass die Permanentmagnete gegenüberliegend zu den Planarspulen der Planarspulenanordnung angeordnet sind. Besonders bevorzugt ist vorgesehen, dass eine Ausdehnung der Permanentmagnete sowohl in radialer Richtung als auch in Umfangsrichtung zumindest im Wesentlichen, insbesondere vollständig, identisch mit einer Ausdehnung der Planarspulenanordnung in der Radialrichtung und der Umfangsrichtung ist.

Bei einer alternativen Ausgestaltung der Erfindung ist vorgesehen, dass die zweite Magneteinrichtung als Leiterplatte ausgebildet ist, die mehrere kreisförmig um die Rotationsachse angeordnete Planarspulen aufweist, die eine Planarspulenanordnung bilden, und dass die erste Magneteinrichtung als Permanentmagnetanordnung ausgebildet ist, die mehrere, insbesondere kreisscheibenförmig ausgebildete, Permanentmagnete umfasst. Hierbei handelt es sich um eine kinematische Umkehr der vorstehend beschriebenen Ausgestaltung der ersten Magneteinrichtung und der zweiten Magneteinrichtung. Hierbei sind die Permanentmagnete der Permanentmagnetanordnung beispielsweise in einer nicht magnetisierbaren, kreisringförmigen Scheibe aufgenommen. Ferner ist die Planarspulenanordnung als Leiterplatte an der Innenfläche der ersten Ronde und/oder an der Innenfläche der zweiten Ronde festgelegt. Bei dieser Ausgestaltung der Planarspulenanordnung ist eine elektrische Drehkontaktierung zwischen der rotierenden Leiterplatte und der am Stator festgelegten Steuerung vorzusehen, die beispielsweise mit einem am Rotor festgelegten (rotierenden) Kommutator und am Stator festgelegten Bürsten verwirklicht werden kann.

Bevorzugt ist vorgesehen, dass der Stator eine mit der Planarspulenanordnung elektrisch verbundene Steuerung umfasst, die zur individuellen Bereitstellung von elektrischer Energie an die Planarspulen der Planarspulenanordnung ausgebildet ist. Bei einer starren Verbindung zwischen der Planarspulenanordnung und dem Stator ist vorzugsweise vorgesehen, dass die Steuerung über eine oder mehrere Steckverbindungen mit der Leiterplatte verbunden ist. In diesem Fall wird der Rotationsantrieb beispielsweise in der Art eines bürstenlosen Gleichstrommotors mit elektronischer Kommutierung betrieben.

Bei einer drehbeweglichen Anordnung der Leiterplatte mit der Planarspulenanordnung gegenüber dem Stator ist beispielsweise eine Kombination von Bürsten und einem Kommutator vorgesehen, um die gewünschte elektrische Verbindung zwischen der Steuerung und der Planarspulenanordnung zu gewährleisten. In diesem Fall wird der Rotationsantrieb beispielsweise in der Art einer Gleichstrommaschine mit mechanischer Kommutierung (Bürstenkommutierung) betrieben.

In weiterer Ausgestaltung der Erfindung ist vorgesehen, dass die Steuerung in einem Steuerungsgehäuse aufgenommen ist, an dem ein Lagerrohr festgelegt ist, das koaxial zur Rotationsachse ausgerichtet ist und das eine kreiszylindrische Oberfläche aufweist, die als Lageraufnahme für ein Drehlager ausgebildet ist, das für eine Drehlagerung des Rotors am Stator ausgebildet ist. Je nach Ausgestaltung des Rotors kann entweder eine Innenoberfläche oder eine Außenoberfläche des Lagerrohrs für die Festlegung eines Lagers, insbesondere eines Innenrings oder eines Außenrings eines Gleitlagers oder Wälzlagers genutzt werden. Bei einer Nutzung der Außenoberfläche des Lagerrohrs kann das Lagerrohr auch endseitig verschlossen ausgebildet sein oder als massiver Lagerstutzen verwirklicht werden. Ferner kann das Lagerrohr in einen Raumbereich hineinragen, der von den Schaufeln an der ersten Ronde, die einen Schaufelkranz bilden, in radialer Richtung nach außen begrenzt wird. Bei geeigneter Ausgestaltung des Lagerrohrs wird dieses durch die von den Schaufeln geförderte Luft angeströmt und kann somit auch als Kühlkörper für die im Steuerungsgehäuse aufgenommene Steuerung dienen.

Bei einer vorteilhaften Weiterbildung der Erfindung ist vorgesehen, dass die Steuerung mit wenigstens einem Sensor aus der Gruppe: Temperatursensor, Stromsensor, Winkelsensor, Drehzahlsensor, Drucksensor, Beschleunigungssensor, elektrisch verbunden ist und dass die Steuerung für eine Auswertung eines Sensorsignals des wenigstens einen Sensors ausgebildet ist. Bevorzugt ist vorgesehen, dass auf Basis des Sensorsignals des wenigstens einen Sensors eine Regelung für den Rotationsantrieb des Ventilators durchgeführt werden kann. Beispielhaft kann vorgesehen sein, auf Basis eines Temperatursignals, das von einem Temperatursensor bereitgestellt wird, eine Ventilatorregelung durchzuführen, um eine vom Temperatursensor ermittelte Temperatur durch Variation der Ventilatordrehzahl in einem vorgegebenen Temperaturbereich zu halten. Bei einer Ausgestaltung des Sensors als Stromsensor kann eine Stromregelung durchgeführt werden, mit deren Hilfe ein energieeffizienter Betrieb des Ventilators verwirklicht werden kann. Bei einer Ausgestaltung des Sensors als Winkelsensor oder Drehzahlsensor kann eine Drehzahlregelung für den Ventilator verwirklicht werden. Bei einer Ausgestaltung des Sensors als Drucksensor kann eine druckgesteuerte Regelung der Drehzahl des Ventilators vorgenommen werden. Bei einer Ausgestaltung des Sensors als Beschleunigungssensor kann beispielsweise eine Drehzahlbegrenzung für den Ventilator verwirklicht werden.

Zweckmäßig ist es, wenn der Stator mit der ersten Innenfläche oder mit einer der ersten Ronde abgewandten zweiten Außenfläche der zweiten Ronde eine in einer Umfangsrichtung umlaufende Spaltdichtung ausbildet. Beispielhaft ist vorgesehen, dass der Ventilator zumindest teilweise in einem Gehäuse, insbesondere in einem Gehäuse für eine raumlufttechnische Anlage, angeordnet ist und der Stator als Bestandteil des Gehäuses ausgebildet ist. In diesem Fall kann erwünscht sein, dass zwischen dem Rotor und dem Stator eine Dichtwirkung vorliegt, die mit Hilfe einer berührungsfreien Spaltdichtung, die auch als Labyrinthdichtung bezeichnet wird, verwirklicht werden kann. Beispielsweise kann am Rotor ein koaxial zur Rotationsachse ausgerichteter Ring ausgebildet sein, der in eine korrespondierende Ringnut am Stator berührungsfrei eingreift, um hierdurch einen Strömungswiderstand zwischen dem Rotor und dem Stator zu verwirklichen, mit dem die gewünschte Dichtwirkung erzeugt werden kann.

In weiterer Ausgestaltung der Erfindung ist vorgesehen, dass Endbereiche der Schaufeln, die der ersten Ronde abgewandt sind, mit einem koaxial zur Rotationsachse ausgerichteten Ring verbunden sind. Der Ring dient zur Stabilisierung der Schaufeln und zur Optimierung eines Strömungswegs für das vom Ventilator geförderte Fluid, insbesondere Luft. Beispielhaft ist vorgesehen, dass der Ring in einer Querschnittsebene, die die Rotationsachse umfasst, einen kreisabschnittsförmigen oder parabelabschnittsförmigen Querschnitt aufweist. Besonders bevorzugt ist vorgesehen, dass der Ring in einem radial innenliegenden Ringbereich einen größeren Abstand zur ersten Ronde als in einem radial außen liegenden Ringbereich aufweist.

Vorteilhaft ist es, wenn eine dritte Ronde koaxial zur Rotationsachse angeordnet ist, die drehfest mit der zweiten Ronde verbunden ist und die mit der zweiten Ronde einen zweiten Ringspalt begrenzt, in dem eine mit dem Stator verbundene, kreisringförmige dritte, insbesondere als Planarspulenanordnung ausgebildete, Magneteinrichtung angeordnet ist, wobei die zweite Ronde und/oder die dritte Ronde mit einer vierten, insbesondere als Permanentmagnetanordnung ausgebildeten, Magneteinrichtung versehen ist, die im zweiten Ringspalt angeordnet ist. Mit der dritten Ronde und der dritten und vierten Magneteinrichtung kann eine Erhöhung des vom Stator auf den Rotor übertragenen Drehmoments erzielt werden. Vorzugsweise ist vorgesehen, dass die dritte Magneteinrichtung in gleicher Weise wie die erste Magneteinrichtung ausgebildet ist und dass die vierte Magneteinrichtung in gleicher Weise wie die zweite Magneteinrichtung ausgebildet ist. Eine weitere Erhöhung der Anzahl von Ronden und zugeordneten Magneteinrichtungen kann vorgesehen werden, wenn eine weitere Drehmomentsteigerung gewünscht ist.

Vorteilhafte Ausführungsformen der Erfindung sind in der Zeichnung dargestellt. Hierbei zeigt:
- Figur 1: eine streng schematische Schnittdarstellung einer ersten Ausführungsform eines Ventilators,
- Figur 2: eine streng schematische Ansicht von vorne auf eine erste Magneteinrichtung,

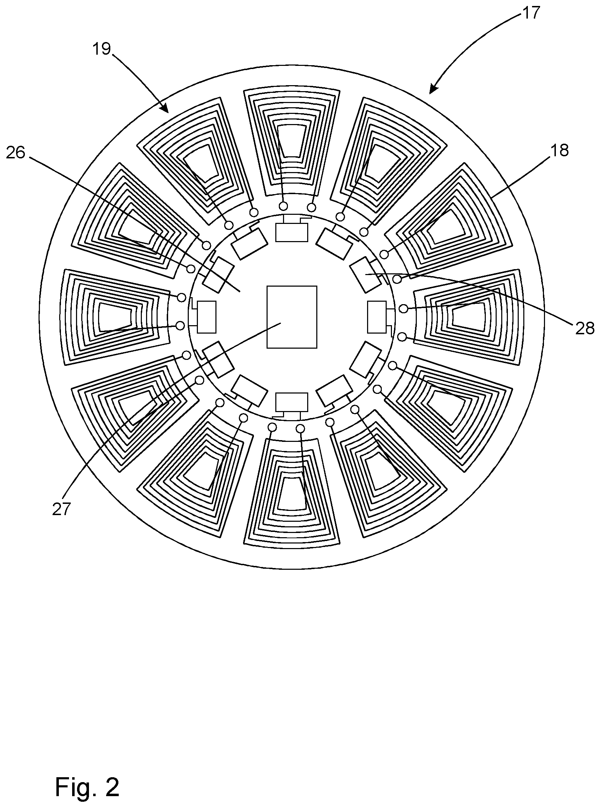

- Figur 2: eine streng schematische Ansicht von vorne auf eine zweite Magneteinrichtung, und

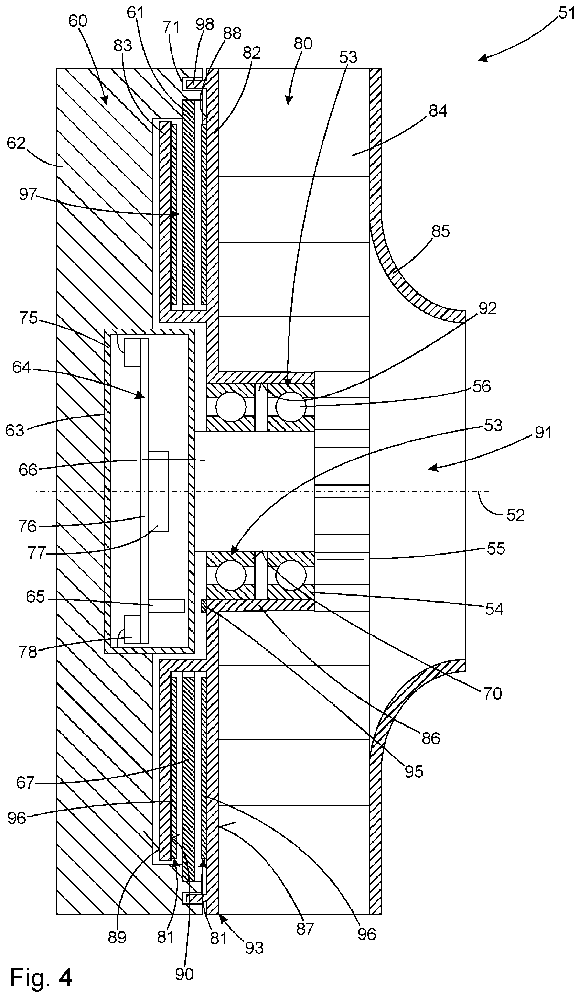

- Figur 4: eine streng schematische Schnittdarstellung einer zweiten Ausführungsform eines Ventilators.

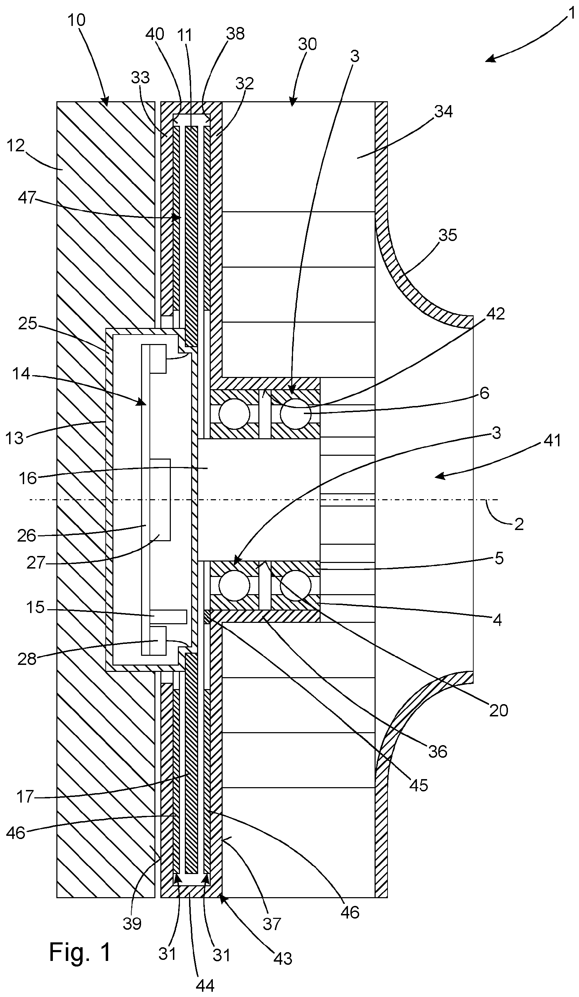

Ein in der Figur 1 gezeigter Ventilator 1 weist einen Stator 10 und einen als Ventilatorrad ausgebildeten Rotor 30 auf, wobei der Rotor 30 drehbewegliche um eine Rotationsachse 2 am Stator 10 gelagert ist. Ein solcher Ventilator 1 kann beispielsweise zur Förderung von Luft oder eines anderen gasförmigen Fluids verwendet werden, wobei die gewünschte Förderbewegung für das gasförmige Fluid durch eine Rotation des Rotors 30 um die Rotationsachse 2 bewirkt wird. Zur Bereitstellung der Rotationsenergie, die der Rotor 30 zur Förderung des gasförmigen Fluids benötigt, bilden der Stator 10 und der Rotor 30 einen Elektromotor, der als Scheibenläufer oder Axialflussmotor ausgebildet ist. Um die gewünschte kompakte Bauform für den Ventilator 1 verwirklichen zu können, sind die zur Bereitstellung des Drehmoments auf den Rotor 30 erforderlichen Komponenten, die nachstehend als erste Magneteinrichtung 11 und zweite Magneteinrichtung 31 bezeichnet werden, derart baulich in den Rotor 30 integriert, dass nachstehend näher beschriebene Komponenten des Rotors 30 mehrere Funktionen wahrnehmen.

Hierin liegt ein erheblicher Unterschied gegenüber einer separaten Ausführung von Elektromotor einerseits und Ventilatorrad andererseits, wie sie aus dem Stand der Technik bekannt ist. Beispielsweise können hierdurch aus der Stand der Technik bekannte Komponenten wie eine Antriebswelle des Elektromotors und eine am Ventilatorrat vorzusehende Nabe zur Aufnahme der Antriebswelle entfallen.

Rein exemplarisch umfasst der Stator 10 eine Trägerplatte 12, die beispielsweise zur Festlegung des Ventilators 1 an einem oder in einem Gehäuse einer Lüftungseinrichtung oder einer anderen Einrichtung, die zur Handhabung eines gasförmigen Fluids genutzt werden kann, vorgesehen ist. Beispielhaft ist die Trägerplatte 12 kreiszylindrisch koaxial zur Rotationsachse 2 ausgebildet und weist eine kreiszylindrische Aussparung 13 auf, die ebenfalls koaxial zur Rotationsachse 2 ausgerichtet ist. In der Aussparung 13 ist ein Steuerungsgehäuse 25 angeordnet, in dem eine Steuerung 14 aufgenommen ist, die in nicht näher dargestellter Weise mit einer elektrischen Stromquelle verbunden werden kann. Die Steuerung 14 umfasst eine auch als gedruckte Schaltung bezeichnete Leiterplatte 26, auf der nur schematisch dargestellte elektrische und elektronische Komponenten wie beispielsweise Widerstände, Kondensatoren, wenigstens ein Mikrocontroller 27 und elektrische Endstufen 28 angeordnet sind. Der Mikrocontroller 27 ist zu Durchführung eines gespeicherten Computerprogramms ausgebildet, mit dessen Hilfe eine Ansteuerung der elektrischen Endstufen 28 vorgenommen werden kann, um elektrische Energie an die nachstehend näher beschriebene erste Magneteinrichtung 11 bereitstellen zu können. Ferner umfasst die Steuerung 14 einen Sensor 15, der beispielsweise als Hall-Sensor ausgebildet sein kann und der zur Erfassung eines Magnetfelds ausgebildet ist, das von einem dem Rotor 30 zugeordneten Permanentmagnet 45 abgegeben wird. Hierdurch wird die Steuerung 14 in die Lage versetzt, eine Drehzahl des Rotors 30 um die Rotationsachse 2 zu bestimmen. Bei einer Anordnung mehrerer Permanentmagnete 45, insbesondere in einer ungleichen Winkelteilung, kann die Steuerung 14 anhand der Signalfolgen des Sensors 15 auch ein Rückschluss auf eine Winkelstellung des Rotors 30 gegenüber dem Stator 10 ziehen. Diese Information kann für die Ansteuerung der ersten Magneteinrichtung 11 genutzt werden.

Wie aus der schematischen Darstellung der Figur 2 entnommen werden kann, ist die erste Magneteinrichtung 11 als Leiterplatte 17 ausgebildet, bei der elektrische Leiterbahnen in mehreren, nicht näher dargestellten Ebenen (multi layer printed circuit board) angeordnet sind, um mehrere, elektrisch getrennt voneinander ausgebildete Planarspulen 18 zu bilden, die in ihrer Gesamtheit eine Planarspulenanordnung 19 ausbilden. Jede der Planarspulen 18 kann von der Steuerung 14 elektrisch einzelnen angesteuert werden, um ein elektromagnetisches Wanderfeld auszubilden, das um die Rotationsachse 2 rotiert. Dabei kann die Steuerung 14 sowohl die Feldstärke für das Wanderfeld als auch die Rotationsgeschwindigkeit für das Wanderfeld in Abhängigkeit von der Rotationsgeschwindigkeit des Rotors 30 einstellen, um beispielsweise eine vorgegebene Drehzahl für den Rotor 30 auch bei wechselnder Last einhalten zu können.

Der Rotor 30 setzt sich rein exemplarisch aus einer ersten, kreisringförmigem Ronde 32, einer zweiten kreisringförmigen Ronde 33, mehreren Schaufeln 34, einem Ring 35 und einem Lagerrohr 36 zusammen. Dabei ist vorgesehen, dass die Schaufeln 34 radial außenliegend, vorzugsweise in konstanter Winkelteilung gegenüber der Rotationsachse 2, an einer ersten Außenfläche 37 der ersten Ronde 32 angeordnet sind. Wie der Darstellung der Figur 1 entnommen werden kann, ist die erste Außenfläche 37 der zweiten Ronde 33 abgewandt, sodass die Schaufeln 34 in eine von der zweiten Ronde 33 wegweisende Raumrichtung längs der Rotationsachse erstreckt sind. Die Schaufeln 34 bilden einen kreisringförmigem Schaufelkranz, der radial innenliegend einen zumindest im Wesentlichen kreiszylindrischen Einströmraum 41 berandet. Dieser Einströmraum 41 wird zusätzlich vom Ring 35 begrenzt, der axial beabstandet zur ersten Ronde 32 angeordnet und endseitig mit axialen Stirnflächen der Schaufeln 34 verbunden ist. Gemäß der Darstellung der Figur 1 weist der Ring 35 eine parabelabschnittsförmige Profilierung auf. Beispielhaft ist vorgesehen, dass ein koaxial zur ersten Ronde 32 ausgerichtetes und mit der ersten Ronde 32 verbundenes Lagerrohr 36 ebenfalls in den Einströmraum 41 hineinragt. Außenringe 4 von Kugellagern 3 liegen ortsfest an einer Innenoberfläche 42 des Lagerrohrs 36 an. Innenringe 5 der Kugellager 3 sind auf eine Außenoberfläche 20 des Lagerstutzens 16 aufgeschoben und dort festgelegt und stehen über bewegliche Wälzkörper 6 in Verbindung mit den jeweiligen Außenringen 4. Dementsprechend gewährleisten die beiden Kugellager 3 die Drehbeweglichkeit des Rotors 30 gegenüber dem Stator 10.

Die erste Ronde 32 ist in einem radial außenliegenden Umfangsbereich 43 mit der zweiten Ronde 33 verbunden. Rein exemplarisch erstreckt sich zwischen der ersten Ronde 32 und der zweiten Ronde 33 ein koaxial zur Rotationsachse 2 ausgerichtetes Rohrstück 44, das mit der ersten Ronde 32 und mit der zweiten Ronde 33 verbunden ist. Hierbei begrenzt das Rohrstück 44 einen zwischen der ersten Ronde 32 und der zweiten Ronde 33 ausgebildeten Ringspalt 47 in radialer Richtung nach außen, sodass die mit der Steuerung 14 gekoppelte Leiterplatte 17 von Ihnen in den Ringspalt 47 eingreifen kann. In der Praxis kann beispielsweise vorgesehen sein, dass das Rohrstück 44 stoffschlüssig mit der ersten Ronde 32 verbunden ist und dass die zweite Ronde 33 durch eine lösbare Verbindung, insbesondere durch mehrere am Umfang vorgesehene Schrauber Verbindungen mit dem Rohrstück 44 verbunden wird, um eine Montage des Rotors 30 an den Stator 10 zu ermöglichen.

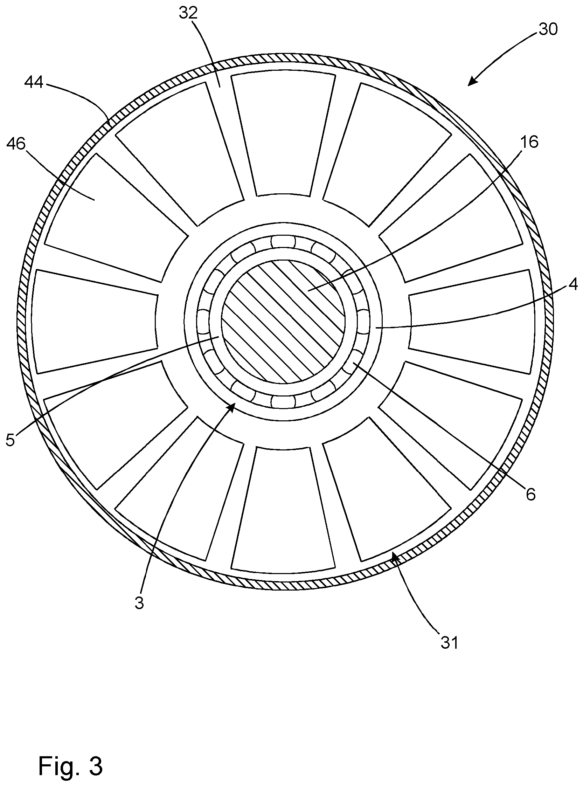

Wie den Darstellungen der Figuren 1 und 3 entnommen werden kann, sind an einer ersten Innenfläche 38 der ersten Ronde 32 und an einer der ersten Innenfläche 38 gegenüberliegenden zweiten Innenfläche 40 der zweiten Ronde 33 jeweils in gleicher Winkelteilung relativ zur Rotationsachse angeordnete Permanentmagnetscheiben 46 angebracht. Diese Permanentmagnetscheiben 46 sind für eine magnetische Wechselwirkung mit dem Wanderfeld, das von der Planarspulenanordnung 19 bei entsprechende Ansteuerung durch die Steuerung 14 bereitgestellt werden kann, ausgebildet. Vorzugsweise sind die Permanentmagnetscheiben 46 in axialer Richtung magnetisiert, sodass eine nicht eingezeichnete Verbindung zwischen dem magnetischen Nordpol und dem magnetischen Südpol der jeweiligen Permanentmagnetscheibe 46 parallel zur Rotationsachse 2 ausgerichtet ist. Wie der Darstellung der Figur 3 entnommen werden kann, sind die Permanentmagnetscheiben 46 rein exemplarisch als Kreisringsegmente ausgebildet, können jedoch auch eine andere Gestaltung, insbesondere eine kreiszylindrische Form, aufweisen.

Die in der Figur 4 dargestellte zweite Ausführungsform eines Ventilators 51 ist mit Bezugszeichen versehen, die gegenüber der ersten Ausführungsform des Ventilators 1 um 50 erhöht sind. Hierbei werden funktionsgleiche Komponenten nicht nochmals beschrieben.

Der Ventilator 51 gemäß der Figur 4 unterscheidet sich von der ersten Ausführungsform des Ventilators gemäß den Figuren 1 bis 3 dadurch, dass der Ringspalt 97 in radialer Richtung nach innen durch ein Rohrstück 94 begrenzt wird, das die erste Ronde 82 mit der zweiten Ronde 83 verbindet. Dementsprechend ragt die Leiterplatte 67 in radialer Richtung nach innen in den Ringspalt 97 hinein und ist in einem radial außen liegenden Bereich mit der Trägerplatte 62 des Stators 60 mechanisch verbunden. Die in der Aussparung 63 aufgenommene Steuerung 64 ist in nicht näher dargestellter Weise elektrisch mit der Leiterplatte 67 verbunden, wobei die Leiterplatte 67 in gleicher Weise wie die Leiterplatte 17 eine nicht gezeigte Planarspulenanordnung aufweist. Ein weiterer Unterschied der zweiten Ausführungsform des Ventilators 51 gegenüber der ersten Ausführungsform des Ventilators 1 besteht darin, dass an der zweiten Außenfläche 89 der zweiten Ronde 83 benachbart zur Außenumfangsfläche ein in axialer Richtung koaxial zur Rotationsachse 2 erstreckter Ringbund 98 angeordnet ist, der berührungslos in eine umlaufende Ringnut 71 eingreift, die in der Trägerplatte 62 ausgebildet ist, um eine Labyrinthdichtung zwischen dem Rotor 80 und dem Stator 60 zu bilden.

## Patentansprüche

1. Ventilator (1; 51) mit einem Stator (10; 60) und einem drehbeweglich um eine Rotationsachse (2; 52) am Stator (10; 60) gelagerten Rotor (30; 80), wobei der Rotor (30; 80) eine erste Ronde (32; 82) und eine mit der ersten Ronde (32; 82) verbundene zweite Ronde (33; 83) aufweist, wobei die erste Ronde (32; 82) und die zweite Ronde (33; 83) jeweils koaxial zur Rotationsachse (2; 52) ausgerichtet sind und wobei in einem ersten Ringspalt (47; 97), der von einer ersten Innenfläche (38; 88) der ersten Ronde (32; 82) und von einer zweiten Innenfläche (39; 89) der zweiten Ronde (33; 83) begrenzt wird, eine mit dem Stator (10; 60) verbundene, kreisringförmige erste Magneteinrichtung (11; 61) angeordnet ist, wobei an der ersten Innenfläche (38; 88) und/oder an der zweiten Innenfläche (39; 89) eine zweite Magneteinrichtung (31; 81) festgelegt ist und wobei die erste Ronde (32; 82) an einer der zweiten Ronde (33; 83) abgewandten ersten Außenfläche (37; 87) mit mehreren Schaufeln (34; 84) versehen ist.

2. Ventilator (1; 51) nach Anspruch 1, **dadurch gekennzeichnet, dass** die erste Ronde (32; 82) an einem Außenumfangsbereich mit der zweiten Ronde (33; 83) verbunden ist und dass die erste Magneteinrichtung (11; 61) einen kleineren Außendurchmesser als die erste Ronde (32; 82) und die zweite Ronde (33; 83) aufweist, wobei wenigstens eine Ronde aus der Gruppe: erste Ronde (32; 82), zweite Ronde (33; 83), als Kreisring ausgebildet ist.

3. Ventilator (1; 51) nach Anspruch 1, **dadurch gekennzeichnet, dass** die erste Ronde (32; 82) und die zweite Ronde (33; 83) in einem radial innenliegenden Koppelbereich miteinander verbunden sind und dass die erste Magneteinrichtung (11; 61) einen größeren Außendurchmesser als die erste Ronde (32; 82) und/oder die zweite Ronde (33; 83) aufweist.

4. Ventilator (1; 51) nach Anspruch 1, 2 oder 3, **dadurch gekennzeichnet, dass** die erste Magneteinrichtung (11; 61) als Leiterplatte ausgebildet ist, die mehrere kreisförmig um die Rotationsachse (2; 52) angeordnete Planarspulen (18) aufweist, die eine Planarspulenanordnung (19) bilden, und dass die zweite Magneteinrichtung (31; 81) als Permanentmagnetanordnung ausgebildet ist, die mehrere, insbesondere kreisscheibenförmig ausgebildete, Permanentmagnete umfasst.

5. Ventilator (1; 51) nach einem der Ansprüche 1 bis 4, **dadurch gekennzeichnet, dass** die zweite Magneteinrichtung (31; 81) als Leiterplatte ausgebildet ist, die mehrere kreisförmig um die Rotationsachse (2; 52) angeordnete Planarspulen (18) aufweist, die eine Planarspulenanordnung (19) bilden, und dass die erste Magneteinrichtung (11; 61) als Permanentmagnetanordnung ausgebildet ist, die mehrere, insbesondere kreisscheibenförmig ausgebildete, Permanentmagnete (46; 96) umfasst.

6. Ventilator (1; 51) nach Anspruch 4 oder 5, **dadurch gekennzeichnet, dass** der Stator (10; 60) eine mit der Planarspulenanordnung (19) elektrisch verbundene Steuerung (14; 64) umfasst, die zur individuellen Bereitstellung von elektrischer Energie an die Planarspulen (18) der Planarspulenanordnung (19) ausgebildet ist.

7. Ventilator (1; 51) nach Anspruch 6, **dadurch gekennzeichnet, dass** die Steuerung (14; 64) in einem Steuerungsgehäuse (25; 75) aufgenommen ist, an dem ein Lagerrohr (36; 86) festgelegt ist, das koaxial zur Rotationsachse (2; 52) ausgerichtet ist und das eine kreiszylindrische Oberfläche aufweist, die als Lageraufnahme für ein Drehlager (3; 53) ausgebildet ist, das für eine Drehlagerung des Rotors (30; 80) am Stator (10; 60) ausgebildet ist.

8. Ventilator (1; 51) nach Anspruch 6 oder 7, **dadurch gekennzeichnet, dass** die Steuerung (14; 64) mit wenigstens einem Sensor (15; 65) aus der Gruppe: Temperatursensor, Stromsensor, Winkelsensor, Drehzahlsensor, Drucksensor, Beschleunigungssensor, elektrisch verbunden ist und dass die Steuerung (14; 64) für eine Auswertung eines Sensorsignals des wenigstens einen Sensors (15; 65) ausgebildet ist.

9. Ventilator (1; 51) nach einem der vorhergehenden Ansprüche, **dadurch gekennzeichnet, dass** der Stator (10; 60) mit der ersten Innenfläche (38; 88) oder mit einer der ersten Ronde (32; 82) abgewandten zweiten Außenfläche (39; 89) der zweiten Ronde (33; 83) eine in einer Umfangsrichtung umlaufende Spaltdichtung ausbildet.

10. Ventilator (1; 51) nach einem der vorhergehenden Ansprüche, **dadurch gekennzeichnet, dass** Endbereiche der Schaufeln (34; 84), die der ersten Ronde (32; 82) abgewandt sind, mit einem koaxial zur Rotationsachse (2; 52) ausgerichteten Ring (35; 85) verbunden sind.

11. Ventilator (1; 51) nach einem der vorhergehenden Ansprüche , **dadurch gekennzeichnet, dass** eine dritte Ronde koaxial zur Rotationsachse (2; 52) angeordnet ist, die drehfest mit der zweiten Ronde (33; 83) verbunden ist und die mit der zweiten Ronde (33; 83) einen zweiten Ringspalt begrenzt, in dem eine mit dem Stator (10; 60) verbundene, kreisringförmige dritte, insbesondere als Planarspulenanordnung ausgebildete, Magneteinrichtung angeordnet ist, wobei die zweite Ronde (33; 83) und/oder die dritte Ronde mit einer vierten, insbesondere als Permanentmagnetanordnung ausgebildeten, Magneteinrichtung versehen ist, die im zweiten Ringspalt angeordnet ist.
